# EUROPÄISCHE PATENTSCHRIFT

(11) **EP 0 708 212 B1**
(45) Veröffentlichungstag und Bekanntmachung des Hinweises auf die Patenterteilung: **10.05.2000**
(21) Anmeldenummer: 95114767.7
(22) Anmeldetag: 20.09.1995
(51) Int. Cl.: E04D 12/00, E04D 5/10, B32B 27/12

(54) **Unterspannbahn, insbesondere für geneigte, wärmegedämmte Dächer**
Under-roof membrane, particularly suited for heat insulated sloping roofs
Membrane de sous-toiture, en particulier pour toits inclinés isolés thermiquement

(30) Priorität: 20.10.1994 DE 4437521
(43) Veröffentlichungstag der Anmeldung: 24.04.1996
(73) Patentinhaber: EWALD DÖRKEN AG, 58313 Herdecke (DE)
(72) Erfinder: Fischer, Jörg, Dipl.-Chem., D-45481 Mülheim/Ruhr (DE); Urban, Klaus, Dipl.-Ing., D-58313 Herdecke (DE); Jablonka, Dieter, Dipl-Ing., D-58313 Herdecke (DE)
(74) Vertreter: Patentanwälte Wenzel & Kalkoff

(56) Entgegenhaltungen:
- EP-A- 0 169 308
- EP-A- 0 179 162
- DE-A- 3 425 795
- DE-C- 3 914 041
- DE-U- 9 407 291
- FR-A- 2 134 031
- FR-A- 2 487 884
- GB-A- 1 341 605
- GB-A- 2 193 153
- US-A- 4 684 568
- Coating 9/92, Seiten 290-296

## Beschreibung

Die vorliegende Erfindung bezieht sich auf Unterspannbahnen, insbesondere für geneigte, wärmegedämmte Dächer mit einer wasser- und wasserdampfdurchlässigen, gegenüber Wasser und Wasserdampf beständigen Vliesschicht und einer auf dieser angeordneten und mit dieser verbundenen wasserdampfdurchlässigen, wasserundurchlässigen, gegenüber Wasser und Wasserdampf beständigen Sperrschicht.

Aus der EP 0 169 308 B1 ist eine Unterspannbahn der vorstehenden Art bekannt, die aus einer Polyurethanfolie besteht, die auf einer Seite mit einer Vliesschicht belegt ist, die mit der Polyurethanfolie fest verbunden ist. Diese bekannte Unterspannbahn dient dazu, die darunterliegenden Konstruktionsteile und die angrenzenden Räume vor eingedrungenem, auftauendem Flugschnee, Regen sowie Staub und Ruß zu schützen. Sie ist deshalb wasserdicht ausgebildet. Zur Vermeidung einer Wasserdampfkondensation an der Unterspannbahn ist diese andererseits wasserdampfdurchlässig.

Infolge wachsender Anforderungen an die Wärmedämmung nimmt die Dicke der im Baubereich eingesetzten Wärmedämmschichten zu, so daß der für die Belüftung der Konstruktionsteile zur Verfügung stehende Querschnitt abnimmt. Zusätzlich bewirkt das Streben nach kurzen Bau- und raschen Bezugszeiten von Gebäuden, daß vermehrt mit Neubaufeuchte zu rechnen ist, die durch stärkere Heizungsanlagen ausgetrieben wird. Diese Entwicklung hat in Verbindung mit einer Zunahme der Temperaturdifferenz an den Wärmedämmschichten dazu geführt, daß erhöhte Werte für die Wasserdampfdurchlässigkeit gefordert werden, die von der aus der EP 0 169 308 B1 bekannten Unterspannbahn nicht erreicht werden. In der Praxis ergeben sich für diese bekannte Unterspannbahn Wasserdampfdurchlässigkeiten von etwa 150 - 170 g/(m²·24h).

Aus der DE 34 25 795 C2 ist eine weitere Unterspannbahn bekannt, die allerdings keine Vliesschicht aufweist. Die Unterspannbahn ist aus Polyester-Block-Amiden (PEBA) des hydrophilen Typs geformt und als Feuchtigkeitsspeicher ausgebildet. Mit einer derartigen PEBA-Unterspannbahn wird eine Wasserdampfdurchlässigkeit von etwa 1000 g/(m²·24h) erreicht. In der rauhen Praxis der Baustelle ist der Einsatz dieser Unterspannbahn allerdings in vielen Fällen problematisch, da die dünne PEBA-Folie bei punktweiser mechanischer Belastung leicht verletzt und wasserundicht wird.

Es ist daher bereits versucht worden, die Vorteile der beiden oben genannten Unterspannbahnen zu kombinieren, indem eine PEBA-Kunststoffolie auf einer schützenden Vliesschicht angeordnet und mit dieser fest verbunden wird. Es hat sich jedoch gezeigt, daß sich die PEBA-Folie bei Anwesenheit von Wasser innerhalb kurzer Zeit lokal von der Vliesschicht ablöst und die Unterspannbahn dadurch unbrauchbar wird.

Aus der EP-A-0 700 779, die ausschließlich im Hinblick auf Art. 54 (1) und (3) EPÜ zum Stand der Technik gehört, ist eine diffusionsoffene Baufolie bekannt, die eine Polyurethanschicht aufweist, die als Zwischenschicht zwischen beispielsweise zwei Materialbahnen liegt. Soweit der Gegenstand dieser Druckschrift die Priorität aus der deutschen Patentanmeldung 44 28 304 genießt, widmet sich diese Druckschrift jedoch ausschließlich der Wasserdampfdurchlässigkeit einer Baufolie, wobei jedoch wichtige Merkmale für die Funktionsfähigkeit der Baufolie wie Wasseraufnahmefähigkeit und Quellvermögen sowie die damit gegebenenfalls verbundenen Schwierigkeiten nicht weiter erörtert werden.

Es besteht somit die Aufgabe, unter Vermeidung der Nachteile des Standes der Technik eine Unterspannbahn vorzuschlagen, die eine erhöhte Wasserdampfdurchlässigkeit gegenüber dem Stand der Technik besitzt, gegenüber Wasser und Wasserdampf beständig ist, ein relativ geringes Flächengewicht aufweist sowie leicht handhabbar ist und dennoch eine hohe mechanische Festigkeit besitzt.

Die Aufgabe wird erfindungsgemäß dadurch gelöst, daß die Unterspannbahn einen dreischichtigen Aufbau aufweist, der zwei wasser- und wasserdampfdurchlässige, gegenüber Wasser und Wasserdampf beständige Vliesschichten und eine zwischen den Vliesschichten eingebettete und mit diesen verbundene, filmartige, wasserdampfdurchlässige, wasserundurchlässige, wasser- und /oder wasserdampfaufnehmende sowie gegenüber Wasser und Wasserdampf beständige, quellfähige Sperrschicht umfaßt, so daß ein Quellen der Sperrschicht vermieden wird. Unter einer im Sinne der Erfindung quellfähigen Sperrschicht wird eine solche Sperrschicht verstanden, bei der als Folge ihrer Quellung bei Feuchtigkeitsaufnahme eine lokal auftretende Ablösung der Sperrschicht von einer der Vliesschichten stattfinden würde.

Die erfindungsgemäße Unterspannbahn besitzt gegenüber dem Stand der Technik eine deutlich erhöhte Wasserdampfdurchlässigkeit. Die Anordnung der Sperrschicht zwischen zwei mit ihr verbundenen Vliesschichten gewährleistet einen optimalen Schutz der Beschichtung gegen mechanische Beschädigung bei Transport oder Verlegung sowie gegen photochemische Einwirkungen des Sonnenlichts.

Die erfindungsgemäße Unterspannbahn kann mit einem geringen Flächengewicht ausgeführt werden, da die beiden Vliesschichten in bekannter Weise leicht und dennoch extrem reißfest ausgebildet werden können. Dadurch ist eine geringe Dickenbemessung der Sperrschicht und der Vliesschichten möglich, was aus Gründen der Materialkosten, der Handlichkeit bei Transport und Verlegung sowie der Wasserdampfdurchlässigkeit vorteilhaft ist.

Durch die gebäudeseitig innenliegend angeordnete Vliesschicht wird eine gewisse Pufferwirkung erreicht, die es ermöglicht, auch bei Stoßbelastungen Wasserdampf in ausreichendem Maße aufzunehmen und vorübergehend zu speichern, ohne daß dieser Wasserdampfüberschuß auskondensiert.

Gemäß der Erfindung wird die als Folge der Wasseraufnahme bzw. Quellung der Sperrschicht bei Feuchtigkeitsaufnahme lokal auftretende Ablösung der Sperrschicht von einer oder von beiden Vliesschichten durch die Einbettung der Sperrschicht zwischen den beiden Vliesschichten und durch die Verbindung der drei Schichten vermieden. Es hat sich gezeigt, daß sich die drei Schichten der erfindungsgemäßen Unterspannbahn bei Kontakt mit Wasser nicht mehr voneinander lösen, sondern miteinander verbunden bleiben.

Wahrscheinlich spielt sich bei der Aufnahme von Wasser oder größeren Mengen von Wasserdampf etwa folgender Prozeß ab: Die aus der EP 0 169 308 B1 bekannte Unterspannbahn weist eine Polyurethanfolie auf, die nur wenig wasseraufnahmefähig ist - nämlich nur für etwa 1 % ihres Eigengewichts. Die aus der DE 34 25 795 C2 bekannte Unterspannbahn aus einer hydrophilen PEBA-Folie nimmt dagegen etwa 120 % ihres Eigengewichtes an Wasser auf und quillt dabei stark auf, nämlich mit einer Zunahme ihres Anfangsvolumens von etwa 50 %. Bei einer wasseraufnehmenden Sperrschicht, die mit einer Vliesschicht verbunden ist, kommt es daher bei der Aufnahme von Wasser oder größeren Mengen von Wasserdampf in der Sperrschicht und bei dem damit verbundenen Aufquellen der Sperrschicht vermutlich zu starken Scherkräften zwischen Sperrschicht und Vliesschicht, die zu einem Ablösen der Sperrschicht von der Vliesschicht führen. Die Anordnung und Anbringung einer zusätzlichen zweiten Vliesschicht auf der anderen Seite der Sperrschicht bewirkt, daß der nunmehr dreischichtige Aufbau wieder stabilisiert wird und kein Ablösen der Sperrschicht von den Vliesschichten mehr stattfindet. Die Ursachen hierfür könnten beispielsweise an der zweiten Verbindungsfläche entstehende gegensinnige Kräfte, eine Verminderung des Aufquellens der Sperrschicht oder in die Sperrschicht eingebettete Fasern der zweiten Vliesschicht sein.

Die Sperrschicht besteht bevorzugt aus einem wasserdampfdurchlässigen, wasserundurchlässigen, wasser- und/oder wasserdampfaufnehmenden, gegenüber Wasser und Wasserdampf beständigen Material, insbesondere Kunststoffmaterial. Auf diese Weise werden bei entsprechender Materialwahl die gewünschten Eigenschaften der Sperrschicht auf einfache Weise erreicht. Es ist aber auch möglich, die gewünschten Eigenschaften der Sperrschicht zu erreichen, indem ein Material mit abweichenden Eigenschaften in geeigneter Weise verarbeitet wird. Entsprechende Techniken sind beispielsweise aus dem Bekleidungssektor bekannt; so erzielt man dort durch Mikroperforation einer an sich wasser- und wasserdampfundurchlässigen PTFE-Folie eine Wasserdampfdurchlässigkeit bei weiter bestehender Wasserundurchlässigkeit.

Die Sperrschicht besteht gemäß einer Weiterbildung der Erfindung aus einem bei Wasser- und/oder Wasserdampfaufnahme reversibel quellfähigen Material. Die Sperrschicht wird bevorzugt als Kunststoffilm oder Kunststoffolie ausgeführt. Beispielsweise kann durch Auftragen einer pastösen Kunststoffbeschichtung auf eine Seite einer oder beider Vliesschichten und anschließendes Verkleben der beiden Vliesschichten in geeigneter Orientierung ein innenliegender Kunststoffilm erzeugt werden.

Die Dicke der Sperrschicht liegt bevorzugt im Bereich von 10 - 100 µm. Eine große Dicke der Sperrschicht ist nicht notwendig, da die beiden Vliesschichten für die mechanische Stabilität der Unterspannbahn sorgen. Eine zu hohe Dicke der Sperrschicht kann sich im Gegenteil nachteilig auswirken, da sie die Wasserdampfdurchlässigkeit mindert und das Gewicht der Unterspannbahn und die Materialkosten erhöht.

Bei Versuchen der Anmelderin haben sich hydrophile thermoplastische Polyurethane (TPE-U), hydrophile Polyether-Polyamid-Blockcopolymere (TPE-A) und hydrophile Polyetherester (TPE-E) als alleiniges oder anteiliges Material der Sperrschicht besonders bewährt. Daneben kommen aber auch alle anderen Kunststoffe und sonstige Materialien mit den in Anspruch 1 oder Anspruch 2 genannten Eigenschaften in Frage. Die Sperrschicht kann auch aus einer Mischung oder Legierung geeigneter Materialien bestehen. Es ist weiterhin möglich, normalerweise ungeeignete Substanzen durch physikalische oder chemische Veränderungen zur Herstellung der erfindungsgemäßen Unterspannbahn zu verwenden. Beispielsweise können normalerweise hydrophobe Polymere durch chemischen Einbau hydrophiler Gruppen, beispielsweise von Polydiolen wasseraufnehmend gemacht werden.

Die Sperrschicht kann stoffschlüssig, d. h. verbindungsmittelfrei mit mindestens einer der Vliesschichten verbunden, insbesondere aufextrudiert werden. Sie kann aber auch durch Verkleben mit mindestens einer der Vliesschichten verbunden sein.

Die Vliesschichten können in bekannter Weise aus Vliesstoffen künstlichen oder natürlichen Ursprungs hergestellt sein. Besonders bevorzugt bestehen sie vollständig oder anteilig aus Polyethylen-, Polyester- oder Polypropylenfasern oder anderen thermoplastischen Kunststoffen. Solcherart hergestellte Vliese sind wasser- und wasserdampfbeständig, temperaturbeständig, verrottungsfest, leicht und dennoch reißfest. Vliesschichten aus natürlichen Vliesstoffen können unter Gesichtspunkten des Umweltschutzes und der Entsorgung vorteilhaft sein.

Die mechanische Festigkeit der Unterspannbahn kann weiter erhöht werden, indem in oder an der Unterspannbahn ein Netz angeordnet und mit ihr verbunden, vorzugsweise eingeformt ist. Durch die Einbindung eines Netzes ist es möglich, die Sperrschicht und die beiden Vliesschichten so dünn auszubilden, daß die Dicke der Sperrschicht nur hinsichtlich ihrer Funktion der Wasserabschirmung, der Wasser-/Wasserdampfaufnahme und der Wasserdampfdurchlässigkeit ausgelegt werden kann, während die Vliesschichten lediglich auf ihr gewünschtes Speichervolumen sowie auf den gewünschten Schutz gegen punktweise mechanische Beschädigung auszulegen sind. Das Netz übernimmt dann die tragende Funktion in dieser kombinierten Unterspannbahn.

Zur Erhöhung der photochemischen Widerstandsfähigkeit gegenüber Sonnenlicht wird bevorzugt, daß mindestens eine der Vliesschichten und/oder die Sperrschicht in bekannter Weise UV-stabilisierende Substanzen enthält.

Die Erfindung wird im folgenden anhand zweier bevorzugter Ausführungsbeispiele näher erläutert. In den Zeichnungen zeigen:
- Fig. 1: eine Draufsicht auf ein erstes Ausführungsbeispiel einer Unterspannbahn als Ausschnitt;
- Fig. 2: eine Schnittdarstellung der Unterspannbahn von Fig. 1;
- Fig. 3: eine Draufsicht auf ein zweites Ausführungsbeispiel einer Unterspannbahn als Ausschnitt;
- Fig. 4: eine Schnittdarstellung der Unterspannbahn von Fig. 3.

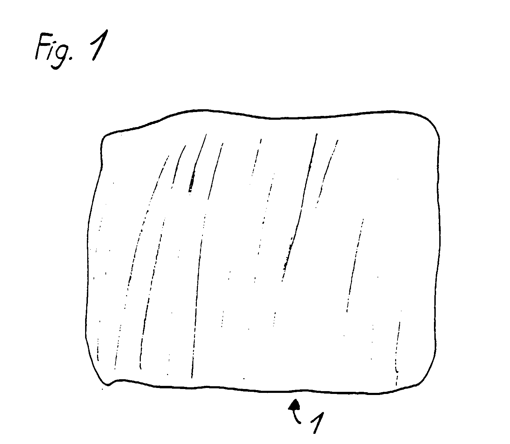

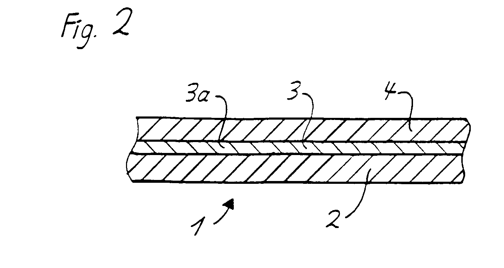

Die in Fig. 1 und Fig. 2 dargestellte Unterspannbahn 1 zeigt einen dreischichtigen Aufbau aus einer im Gebrauch gebäudeseitig innenliegenden Vliesschicht 2 aus Polyethylenfasern, einem als Sperrschicht 3 wirkenden Kunststoffilm 3a sowie einer zweiten, außenliegenden Vliesschicht 4 aus Polypropylenfasern. Die beiden Vliesschichten 2, 4 wurden bei der Herstellung der Unterspannbahn beim Aufextrudieren des Kunststoffilms 3a mit diesem verbunden, indem der Kunststoffilm 3a durch Aufextrudieren auf eine der beiden Vliesschichten erzeugt und die zweite Vliesschicht anschließend an die noch nicht verfestigte Kunststoffschicht 3a auf der ersten Vliesschicht angepreßt wurde. Der Kunststoffilm 3a, der eine Schichtdicke von 60 µm aufweist, besteht aus Elastollan CJ 20/189 oder aus Pebax MX 1074 SN 01 oder aus einer Mischung dieser beiden Substanzen. Bei Elastollan CJ 20/189 handelt es sich um ein wasseraufnehmendes thermoplastisches Polyurethan (TPE-U) der Firma Elastogran. Bei Pebax MX 1074 SN 01 handelt es sich um ein hydrophiles Polyether-Polyamid-Blockcopolymer (TPE-A) der Firma Elf Atochem S.A.

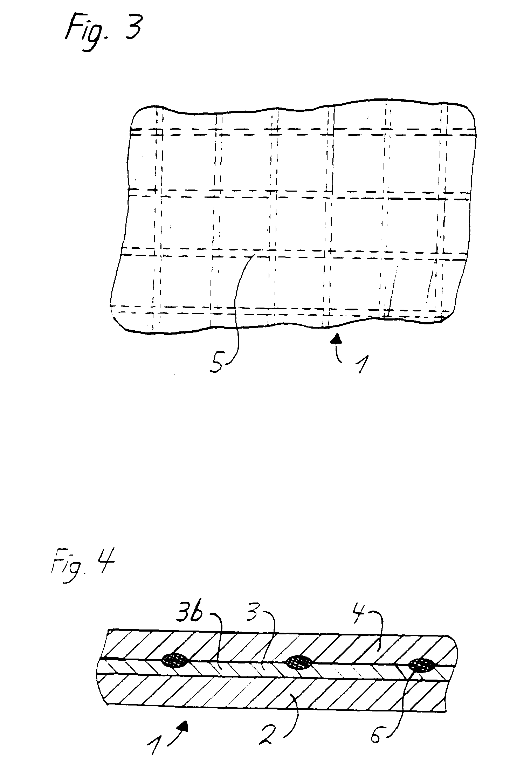

Bei dem in Fig. 3 und Fig. 4 gezeigten zweiten Ausführungsbeispiel einer Unterspannbahn 1 liegt ebenfalls ein dreischichtiger Aufbau vor. Die im Gebrauch gebäudeseitig innenliegende Vliesschicht 2 und die außenliegende Vliesschicht 4 bestehen bei diesem Ausführungsbeispiel aus Polyesterfasern; die als Sperrschicht 3 wirkende Kunststoffolie 3b ist aus Hytrel 8206 HTR hergestellt. Hytrel 8206 HTR ist ein wasseraufnehmender reversibel quellfähiger Polyetherester (TPE-E) der Firma Du Pont. Die Kunststoffolie 3b besitzt eine Dicke von nur 30 µm. Zwischen die Kunststoffolie 3b und die außenliegende Vliesschicht 4 wurde bei der Herstellung der Unterspannbahn ein Netz 5 zur mechanischen Verstärkung eingelegt. In der Fig. 4 sind einige FÄden 6 des Netzes 5 im Querschnitt dargestellt. Die Vliesschichten 2, 4, die Kunststoffolie 3b und das Netz 5 sind durch einen wasser- und wasserdampfbeständigen Klebstoff miteinander verbunden.

Beide Ausführungsbeispiele der erfindungsgemäßen Unterspannbahn haben sich bei praktischen Versuchen als leicht, bequem handhabbar und dennoch mechanisch robust und stabil erwiesen. Es konnten Wasserdampfdurchlässigkeiten im Bereich von 700 - 1000 g/(m²·24h) erreicht werden. Selbst im Wasserbad trat auch nach längerer Zeit kein Ablösen der Vliesschichten 2, 4 und des als Sperrschicht 3 wirkenden Kunststoffilms 3a bzw. der Kunststoffolie 3b voneinander ein.

## Patentansprüche

1. Unterspannbahn (1), insbesondere für geneigte, wärmegedämmte Dächer, mit einer wasser- und wasserdampfdurchlässigen, gegenüber Wasser und Wasserdampf beständigen Vliesschicht (2) und einer auf dieser angeordneten und mit dieser verbundenen wasserdampfdurchlässigen, wasserundurchlässigen, gegenüber Wasser und Wasserdampf beständigen Sperrschicht (3),
dadurch **gekennzeichnet,** daß die Unterspannbahn (1) einen dreischichtigen Aufbau aufweist, der zwei wasser- und wasserdampfdurchlässige, gegenüber Wasser und Wasserdampf beständige Vliesschichten (2, 4) und eine zwischen den Vliesschichten eingebettete und mit diesen verbundene, filmartige, wasserdampfdurchlässige, wasserundurchlässige, wasser- und/oder wasserdampfaufnehmende sowie gegenüber Wasser und Wasserdampf beständige quellfähige Sperrschicht (3) umfaßt, so daß ein Quellen der Sperrschicht (3) vermieden wird.

2. Unterspannbahn nach Anspruch 1, dadurch **gekennzeichnet**, daß die Sperrschicht (3) aus einem wasserdampfdurchlässigen, wasserundurchlässigen, wasser- und/oder wasserdampfaufnehmenden, gegenüber Wasser und Wasserdampf beständigen Material, insbesondere Kunststoffmaterial besteht.

3. Unterspannbahn nach einem oder mehreren der Ansprüche 1 bis 2, dadurch **gekennzeichnet**, daß die Sperrschicht (3) aus einem bei Wasser- und/oder Wasserdampfaufnahme reversibel quellfähigen Material besteht.

4. Unterspannbahn nach einem oder mehreren der Ansprüche 1 bis 3, dadurch **gekennzeichnet,** daß die Sperrschicht (3) ein Kunststoffilm bzw. eine Kunstoffolie (3a) ist.

5. Unterspannbahn nach einem oder mehreren der Ansprüche 1 bis 4, dadurch **gekennzeichnet,** daß die Sperrschicht (3) eine Dicke im Bereich von 10 bis 100 µm aufweist.

6. Unterspannbahn nach einem oder mehreren der Ansprüche 1 bis 5, dadurch **gekennzeichnet**, daß die Sperrschicht (3) eine Dicke im Bereich von 30 bis 50 µm aufweist.

7. Unterspannbahn nach einem oder mehreren der Ansprüche 1 bis 6, dadurch **gekennzeichnet**, daß die Sperrschicht (3) vollständig oder anteilig aus einem hydrophilen thermoplastischen Polyurethan besteht.

8. Unterspannbahn nach einem oder mehreren der Ansprüche 3 bis 7, dadurch **gekennzeichnet,** daß die Sperrschicht (3) vollständig oder anteilig aus einem hydrophilen Polyether-Polyamid-Blockcopolymer besteht.

9. Unterspannbahn nach einem oder mehreren der Ansprüche 3 bis 8, dadurch **gekennzeichnet**, daß die Sperrschicht (3) vollständig oder anteilig aus einem hydrophilen Polyetherester besteht.

10. Unterspannbahn nach einem oder mehreren der Ansprüche 1 bis 9, dadurch **gekennzeichnet,** daß die Sperrschicht (3) mit mindestens einer der Vliesschichten (2,4) stoffschlüssig, d.h. verbindungsmittelfrei verbunden, insbesondere aufextrudiert ist.

11. Unterspannbahn nach einem oder mehreren der Ansprüche 1 bis 10, dadurch **gekennzeichnet,** daß die Sperrschicht (3) mit mindestens einer der Vliesschichten durch Verkleben verbunden ist.

12. Unterspannbahn nach einem oder mehreren der Ansprüche 1 bis 10, dadurch **gekennzeichnet,** daß mindestens eine der Vliesschichten (2, 4) vollständig oder anteilig aus Polyethylen-Fasern besteht.

13. Unterspannbahn nach einem oder mehreren der Ansprüche 1 bis 12 dadurch **gekennzeichnet,** daß mindestens eine der Vliesschichten (2, 4) vollständig oder anteilig aus Polyester-Fasern besteht.

14. Unterspannbahn nach einem oder mehreren der Ansprüche 1 bis 13, dadurch **gekennzeichnet**, daß mindestens eine der Vliesschichten (2, 4) vollständig oder anteilig aus Polypropylen-Fasern besteht.

15. Unterspannbahn nach einem oder mehreren der Ansprüche 1 bis 14, dadurch **gekennzeichnet,** daß mindestens eine der Vliesschichten (2,4) vollständig oder anteilig aus Vliesstoffen natürlichen Ursprungs besteht.

16. Unterspannbahn nach einem oder mehreren der Ansprüche 1 bis 15, dadurch **gekennzeichnet,** daß die Unterspannbahn (1) mittels eines in oder an der Unterspannbahn (1) angeordneten und mit ihr verbundenen, vorzugsweise eingeformten Netzes (5) mechanisch verstärkt ist.

17. Unterspannbahn nach einem oder mehreren der Ansprüche 1 bis 16, dadurch **gekennzeichnet,** daß mindestens eine der Vliesschichten (2, 4) und / oder die Sperrschicht (3) UV-stabilisierende Substanzen enthält.

## Claims

1. Underfelt (1), in particular for thermally insulated fixed roofs, with a web layer (2) which is permeable to water and water vapour and resistant to water and water vapour, and, arranged thereupon and bonded thereto, a barrier layer (3) which is permeable to water vapour and impermeable to water and resistant to water and to water vapour,
characterized in that the underfelt (1) has a three-layer structure which comprises two web layers (2,4) which are permeable to water and water vapour and resistant to water and water vapour, and, embedded between the web layers and bonded to these, a sheet-like swellable barrier layer (3) which is permeable to water vapour and impermeable to water, and absorbs water and/or water vapour, and is also resistant to water and water vapour, so that swelling of the barrier layer (3) is avoided.

2. Underfelt according to Claim 1, characterized in that the barrier layer (3) is composed of a material, in particular a plastic, which is permeable to water vapour and impermeable to water, and absorbs water and/or water vapour, and is resistant to water and water vapour.

3. Underfelt according to one of or both Claims 1 and 2, characterized in that the barrier layer (3) is composed of a material capable of reversible swelling on absorbing water and/or water vapour.

4. Underfelt according to one or more of Claims 1 to 3, characterized in that the barrier layer (3) is a plastic sheet or, respectively, a plastic film (3a).

5. Underfelt according to one or more of Claims 1 to 4, characterized in that the barrier layer (3) has a thickness of from 10 to 100 µm.

6. Underfelt according to one or more of Claims 1 to 5, characterized in that the barrier layer (3) has a thickness within the range from 30 to 50 µm.

7. Underfelt according to one or more of Claims 1 to 6, characterized in that the barrier layer (3) is composed entirely or to some extent of a hydrophilic thermoplastic polyurethane.

8. Underfelt according to one or more of Claims 3 to 7, characterized in that the barrier layer (3) is composed entirely or to some extent of a hydrophilic polyether polyamide block copolymer.

9. Underfelt according to one of more of Claims 3 to 8, characterized in that the barrier layer (3) is composed entirely or to some extent of a hydrophilic polyetherester.

10. Underfelt according to one or more of Claims 1 to 9, characterized in that the barrier layer (3) has been bonded cohesively, i.e. with no bonding agent, to at least one of the web layers (2,4) and in particular has been applied thereto by extrusion.

11. Underfelt according to one or more of Claims 1 to 10, characterized in that the barrier layer (3) has been cohesively bonded to at least one of the web layers.

12. Underfelt according to one or more of Claims 1 to 10, characterized in that at least one of the web layers (2,4) is composed entirely or to some extent of polyethylene fibres.

13. Underfelt according to one or more of Claims 1 to 12, characterized in that at least one of the web layers (2,4) is composed entirely or to some extent of polyester fibres.

14. Underfelt according to one of more of Claims 1 to 13, characterized in that at least one of the web layers (2,4) is composed entirely or to some extent of polypropylene fibres.

15. Underfelt according to one or more of Claims 1 to 14, characterized in that at least one of the web layers (2,4) is composed entirely or to some extent of web materials from a natural source.

16. Underfelt according to one or more of Claims 1 to 15, characterized in that the underfelt (1) has been mechanically reinforced by means of a net (5) arranged in or on the underfelt (1) and bonded to the same, preferably moulded into the same.

17. Underfelt according to one or more of Claims 1 to 16, characterized in that at least one of the web layers (2,4) and/or the barrier layer (3) comprises UV-stabilizing substances.

## Revendications

1. Lé de dessous (1), en particulier pour toits inclinés isolés thermiquement, avec une couche de non-tissé (2) perméable à l'eau et à la vapeur d'eau, résistante à l'eau et à la vapeur d'eau et avec une couche d'étanchéité (3) imperméable à l'eau, perméable à la vapeur d'eau, résistante à l'eau et à la vapeur d'eau, placée sur celle-ci et reliée à celle-ci,
caractérisé en ce
que le lé de dessous (1) présente une structure à trois couches qui comprend deux couches de non-tissé (2, 4) perméables à l'eau et à la vapeur d'eau, résistantes à l'eau et à la vapeur d'eau et une couche d'étanchéité (3) susceptible de gonflement, encastrée entre les couches de non-tissé et reliée à celles-ci, de type pellicule, perméable à la vapeur d'eau, imperméable à l'eau, absorbant l'eau et/ou la vapeur d'eau ainsi que résistante à l'eau et à la vapeur d'eau, si bien qu'un gonflement de la couche d'étanchéité (3) est évité.

2. Lé de dessous selon la revendication 1, caractérisé en ce que la couche d'étanchéité (3) est constituée par une matière perméable à la vapeur d'eau, imperméable à l'eau, absorbant l'eau et/ou la vapeur d'eau, résistante à l'eau et à la vapeur d'eau, en particulier par une matière synthétique.

3. Lé de dessous selon l'une ou plusieurs des revendications 1 à 2, caractérisé en ce que la couche d'étanchéité (3) est constituée par une matière susceptible de gonflement de manière réversible en cas d'absorption d'eau et/ou de vapeur d'eau.

4. Lé de dessous selon l'une ou plusieurs des revendications 1 à 3, caractérisé en ce que la couche d'étanchéité (3) est une pellicule de matière synthétique ou une feuille synthétique (3a).

5. Lé de dessous selon l'une ou plusieurs des revendications 1 à 4, caractérisé en ce que la couche d'étanchéité (3) a une épaisseur de l'ordre de 100 à 100 µm.

6. Lé de dessous selon l'une des revendications 1 à 5, caractérisé en ce que la couche d'étanchéité (3) a une épaisseur de l'ordre de 30 à 50 µm.

7. Lé de dessous selon l'une ou plusieurs des revendications 1 à 6, caractérisé en ce que la couche d'étanchéité (3) est constituée en totalité ou en partie par un polyuréthane thermoplastique hydrophile.

8. Lé de dessous selon l'une ou plusieurs des revendications 3 à 7, caractérisé en ce que la couche d'étanchéité (3) est constituée en totalité ou en partie par un copolymère en masse de polyéther/polyamide hydrophile.

9. Lé de dessous selon l'une ou plusieurs des revendications 3 à 8, caractérisé en ce que la couche d'étanchéité (3) est constituée en totalité ou en partie par un ester de polyéther hydrophile.

10. Lé de dessous selon l'une ou plusieurs des revendications 1 à 9, caractérisé en ce que la couche d'étanchéité (3) est reliée dans le tissu, c'est à-dire sans moyens de liaison, à au moins l'une des couches de non-tissé (2, 4), en particulier qu'elle est extrudée dessus.

11. Lé de dessous selon l'une ou plusieurs des revendications 1 à 10, caractérisé en ce que la couche d'étanchéité (3) est reliée par collage à au moins l'une des couches de non-tissé.

12. Lé de dessous selon l'une ou plusieurs des revendications 1 à 10, caractérisé en ce qu'au moins l'une des couches de non-tissé (2, 4) est constituée en totalité ou en partie par des fibres de polyéthylène.

13. Lé de dessous selon l'une ou plusieurs des revendications 1 à 12, caractérisé en ce qu'au moins l'une des couches de non-tissé (2, 4) est constituée en totalité ou en partie par des fibres de polyester.

14. Lé de dessous selon l'une ou plusieurs des revendications 1 à 13, caractérisé en ce qu'au moins l'une des couches de non-tissé (2, 4) est constituée en totalité ou en partie par des fibres de polypropylène.

15. Lé de dessous selon l'une ou plusieurs des revendications 1 à 14, caractérisé en ce qu'au moins l'une des couches de non-tissé (2, 4) est constituée en totalité ou en partie par des non-tissés d'origine naturelle.

16. Lé de dessous selon l'une ou plusieurs des revendications 1 à 15, caractérisé en ce que le lé de dessous (1) est renforcé mécaniquement au moyen d'un treillis (5) placé dans ou sur le lé de dessous (1) et relié à celui-ci, de préférence en étant moulé.

17. Lé de dessous selon l'une ou plusieurs des revendications 1 à 16, caractérisé en ce qu'au moins l'une des couches de non-tissé (2, 4) et/ou la couche d'étanchéité (3) contient des substances stabilisatrices de rayons ultraviolets.
